# EUROPÄISCHE PATENTSCHRIFT

(11) **EP 3 445 619 B1**
(45) Veröffentlichungstag und Bekanntmachung des Hinweises auf die Patenterteilung: **15.07.2020**
(21) Anmeldenummer: 17722674.3
(22) Anmeldetag: 20.04.2017
(51) Int. Cl.: B60S 1/04

(54) **WISCHLIPPENREINIGUNGSVORRICHTUNG**
WIPING LIP CLEANING DEVICE
DISPOSITIF DE NETTOYAGE DE LÈVRES D'ESSUIE-GLACE

(30) Priorität: 22.04.2016 DE 102016107546
(43) Veröffentlichungstag der Anmeldung: 27.02.2019
(73) Patentinhaber: Prinz, Manfred, 88267 Vogt (DE)
(72) Erfinder: Prinz, Manfred, 88267 Vogt (DE)
(74) Vertreter: Heyerhoff Geiger & Partner Patentanwälte PartGmbB
(86) Internationale Anmeldenummer: PCT/DE2017/100320
(87) Internationale Veröffentlichungsnummer: WO 2017/182037

(56) Entgegenhaltungen:
- DE-U1- 8 627 740
- TW-U- M 267 123
- US-A1- 2007 178 816
- US-B1- 6 322 266

## Beschreibung

Die Erfindung betrifft eine Vorrichtung zum Reinigen von Wischlippen an Scheibenwischerreinigungsblätter von Scheibenreinigungsanlagen.

Scheibenreinigungsanlagen, kurz im Folgenden nur Scheibenwischer, sind Vorrichtungen zum Säubern von Scheiben, wie beispielsweise von Front- oder Heckscheibe eines Fahrzeugs, wie eines Kraftfahrzeugs, Flugzeugs, Schiffes oder eines Schienenfahrzeugs.

Ein solcher Scheibenwischer, angeordnet im Bereich der zu säubernden Scheibe, insbesondere im Bereich einer zu säubernden Scheibenseite der (zu säubernden) Scheibe (im Folgenden vereinfacht auch nur kurz Außenscheibe bezeichnet), besteht üblicherweise aus einem von der zu säubernden Scheibenseite der (zu säubernden) Scheibe bzw. Außenscheibe hoch-/wegklappbaren Wischerarm, einem am Wischerarm gelenkig angeordneten, meist segmentierten Wischerblatt mit einem Profil und einem Antrieb, mittels welchem der Wischerarm und damit das Wischerblatt - bei leichtem (Anpress-)Druck des Wischerblattprofils auf die zu säubernde Seite der Scheibe bzw. Außenscheibe - über diese bewegbar ist.

Diese Wischbewegung des Wischerarms/-blatts über die zu säubernde Scheibenseite der (zu säubernden) Scheibe bzw. Außenscheibe erfolgt meist aus einer Rastposition heraus, in welcher der Wischerarm und das Wischerblatt bei nicht betätigtem Scheibenwischer verbleibt und welche sich üblicherweise an einem Scheibenrand, insbesondere im Bereich eines unteren Randes der Scheibe, befindet, und erfolgt in einer Hin-und-Herbewegung des Wischerarms und Wischerblatts, welche das Wischerblatt in einer Hin-und-Rückbewegung über einen vorbestimmbaren Bereich der zu säubernden Scheibenseite der (zu säubernden) Scheibe bzw. Außenscheibe führt.

Das Wischerblatt ist mit dem Profil, d.h. einer Wischlippe, üblicherweise aus einem Gummi, bestückt, das - wird der angetriebene Wischerarm bzw. das angetriebene Wischerblatt mit der Hin-und-Herbewegung über die zu säubernde Scheibenseite bzw. Außenscheibe bewegt - störende Feuchtigkeit oder Schmutz von der zu säubernden Scheibenseite schiebt und Fahrzeuginsassen bessere Sicht - durch die Scheibe des Fahrzeugs nach außen - ermöglicht.

Bei starker und/oder angetrockneter Verschmutzung auf einer (zu säubernden) Scheibenseite kann üblicherweise diese Scheibenseite zum Wischen durch den Scheibenwischer mithilfe einer Scheibenwaschanlage durch Scheibenwaschwasser befeuchtet werden, welche ein Lösen der Verschmutzung von der (zu säubernden) Scheibenseite erleichtert/ermöglicht.

Es ist weiter auch bekannt, dass durch anthropogene Umweltbelastungen, insbesondere durch Verbrennungsprozesse aller Art, durch Haushalte, Gewerbe, Industrie und Verkehrsmittel aller Art, Verunreinigungen, wie beispielsweise Rußpartikel, Ölrückstände, Flugasche, Reifenabrieb, Zementstäube, Pollenstäube, Staubpartikel, Insektenreste, und vieles mehr freigesetzt werden.

Solche Verunreinigungen (von Luft, Umwelt und Umgebung) lagern sich - auch - an Fahrzeugscheiben bzw. an deren äußeren Scheibenseiten ab, welche dann der Säuberung, um den Fahrzeuginsassen bessere Sicht durch die Scheiben nach außen des Fahrzeugs zu ermöglichen, bedürfen.

Bei der Säuberung der verschmutzten und zu säubernden Fahrzeugscheibenseite bzw. Außenscheibe und bei Betätigung des Scheibenwischers bzw. beim (Hin-und-Her-)Bewegen des Wischerarms/des Wischerblattes des Scheibenwischers über die zu säubernde Fahrzeugscheibenseite bzw. Außenscheibe werden dann die Verunreinigung, welche sich - werden sie durch die Wischlippe des Wischerblattes von der zu säubernden Scheibenseite beim Bewegen des Wischerarms/des Wischerblattes des Scheibenwischers über diese abgestreift - von der zu säubernden Scheibenseite lösen, an der Wischlippe des Wischerblattes aufgefangen.

Durch die Wischbewegung des Wischerarms bzw. des Wischerblattes werden die von der zu säubernden Scheibenseite abgelösten Verunreinigungen von diesem an einen seitlichen Rand der zu säubernden Scheibenseite transportiert - und verbleiben dort.

Ungeachtet dessen verbleibt aber auch ein Teil der Verunreinigungen (weiter) an der Wischlippe (haften), welche dann dort, insbesondere durch Witterungseinflüsse, wie Trockenheit, Sonne und Wärme, antrocknen und verkrusten.

Des Weiteren werden durch "feuchte" Witterungseinflüsse, wie Regen, Schnee und Nebel, die zu säubernden Scheibenseiten der (zu säubernden) Scheiben bzw. Außenscheiben (durch die Feuchtigkeit) benässt, wobei dann die Feuchtigkeit sich an den Außenscheiben befindliche Verunreinigungen nach unten, d.h. zum Scheibenunterrand hin, "spült". Durch - durch den leichten Anpressdruck der Wischlippen bewirktes - enges Anliegen der Wischlippen an den Außenseiten in den Rastpositionen wird ein komplettes Abfließen der Verunreinigungen an den Außenseiten bzw. von den Scheiben verhindert, wobei sich diese so oberhalb der Wischlippen an diesen sammeln.

Auch diese so oberhalb an den Wischlippen gesammelten Verunreinigungen werden - durch die Witterungseinflüsse, wie Trockenheit, Sonne und Wärme, - dort antrocknen und verkrusten.

Solche an den Wischlippen gesammelten bzw. dort angetrockneten/verkrusteten Verunreinigungen (kurz im Folgenden vereinfacht auch nur als "verschmutzte Wischlippen" oder "verschmutzte Wischerblätter" bezeichnet) führen, nicht zuletzt durch Schlierenbildung - bei der Wischbewegung - an den zu säubernden Scheibenseiten bzw. Außenseiten, zu Beeinträchtigungen der Wischfunktion und Wischeffektivität der Scheibenwischer, was wiederum zu unzureichenden Wischergebnissen/-erfolg, wie eine unzureichende und beeinträchtigte Sicht durch die Scheiben nach außen bzw. unzureichende Sichtverhältnisse, führt.

Daneben unterliegen die Wischlippen, sind sie in der Regel aus Gummi, auch einer üblichen gebrauchsbedingten Abnutzung und einem - bedingt auch durch Umwelteinflüssen, wie Sonne u.ä. - zeitlichen Verschleiß. Auch solche abgenützten und verschlissenen Wischlippen führen zu Beeinträchtigungen der Wischfunktion und Wischeffektivität der Scheibenwischer, was wiederum zu unzureichenden Wischergebnissen/-erfolg, wie eine unzureichende und beeinträchtigte Sicht durch die Scheiben nach außen bzw. unzureichende Sichtverhältnisse, führt.

Unzureichende/beeinträchtigte Sichtverhältnisse von Fahrzeuginsassen, insbesondere Fahrzeugführern, stellen aber große Risiken, insbesondere auch für Leib und Leben, bei der Fahrzeugführung dar. Andersherum ausgedrückt, eine klare und schlierenfreie bzw. ausreichende und unbeeinträchtigte Sichtverhältnisse durch Fahrzeugscheiben (nach außen) sind ein wesentlicher und wichtiger Sicherheitsaspekt bei der Fahrzeugführung.

Aus DE 86 27 740 U1 ist ein Gerät zur Säuberung und Schärfung von entropieelastischen Wischlippen bekannt, wobei das Gerät mindestens eine Reibefläche in einer durchgehenden Nut mit keilförmigem, V-förmig ausgebildetem Querschnitt aufweist, der im Wesentlichen mit der Querschnittsform der Wischlippe übereinstimmt.

Aus US 2007/0178816 A1 ist ein Schleifer bekannt, der zwei Platten mit jeweils wenigstens einem gebogenen Bereich und zwei Stücke Sandpapier aufweist. Die Sandpapierstücke werden an den Platten befestigt, bevor die Platten miteinander zu einer V-förmigen Struktur verbunden werden, in der ein Gummistreifen eines Scheibenwischers aufgenommen werden kann. Diese Struktur ist auch aus TW M 267 123 U bekannt.

Der Erfindung liegt die Aufgabe zugrunde, die Nachteile und Einschränkungen im Stand der Technik bei Scheibenwischern zu überwinden.

Insbesondere liegt der Erfindung die Aufgabe zugrunde, eine einfache, wirkungsvolle und kostengünstige sowie eine "von Jedermann bedienbare" und "für Jedermann praktikable" Möglichkeit zur Verfügung zu stellen, welche die Effektivität und Effizienz von Scheibenwischern, insbesondere von Fahrzeugscheibenwischern, gewährleistet und erhöht - und so zur Sicherheit bei einer Fahrzeugführung beiträgt.

Diese Aufgaben wird durch eine Vorrichtung zum Reinigen von Wischlippen an Scheibenwischerreinigungsblättern von Scheibenreinigungsanlagen mit den Merkmalen gemäß dem unabhängigen Patentanspruch gelöst.

Diese Vorrichtung sieht einen zweiseitigen, feuchtigkeitsundurchlässigen Grundträger - mit einer ersten Seite und einer der ersten Seite gegenüberliegenden zweiten Seite sowie mit einer Längs- ("Länge") und Quererstreckung ("Breite") und einer Höhe - vor.

Dabei kann die Länge des Grundträgers zwischen in etwa 2 cm bis in etwa 15 cm, bevorzugt zwischen ungefähr 5 cm und ungefähr 10 cm, besondere bevorzugt zwischen in etwa 7 cm bis in etwa 8 cm, sein. Ferner kann der Grundträger dünn ausgebildet sein, d.h., dessen Dicke liegt bevorzugt in einem Bereich kleiner 2 mm bis 3 mm, besonders bevorzugt kleiner 1 mm.

Vereinfacht ausgedrückt, zweckmäßigerweise ist der Grundkörper ein länglich dünner (feuchtigkeitsundurchlässiger) Körper, welche so dann insbesondere für "Jedermann" handhabbar/bedienbar ist.

Durch diesen feuchtigkeitsundurchlässigen Grundkörper, beispielsweise aus Kunststoff, feuchtigkeitsundurchlässiger Kartonage, feuchtigkeitsundurchlässigem formstabilem Gewebe, feuchtigkeitsundurchlässiger gehärteter Folie, KautschukMaterial oder aus einem anderen wasser-/feuchtigkeitsdichten Material, kann verhindert werden, dass Feuchtigkeit auf der ersten Seite des Grundträgers durch den Grundträger hindurch auf dessen zweite Seite dringt.

Dieser Grundträger weist darüber hinaus einen über die Grundträgerlänge im Wesentlichen N-, Doppel-V- oder Doppel-U-förmigen Querschnitt auf.

Dabei meint "Doppel-U-förmig" bzw. "Doppel-V-förmig", dass diese Querschnittsform durch zwei aneinanderhängende bzw. ineinander übergehende "U"s bzw. "V"s gebildet wird, deren - jeweils durch zwei über eine Rundung bzw. eine Ecke miteinander verbundenen (gegenüberliegenden) Schenkel gebildete - Öffnungen entgegengesetzt zueinander ausgerichtet sind.

Auch anders ausgedrückt, "Doppel-U-förmig" meint eine der "N"-Form ähnliche Form, bei welcher aber im Unterschied zur "N"-Form der Übergang von einem Schenkel zu einem unmittelbar nächsten Schenkel nicht unter einem spitzen Winkel erfolgt, sondern abgerundet bzw. in einer Rundung verläuft, beispielsweise in einer in etwa halbkreisförmigen Rundung.

D.h., eine Abfolge bei einer "Doppel-U-Form" ist ein erster Schenkel übergehend durch eine erste Rundung in einen zweiten Schenkel wieder übergehend durch eine zweite Rundung in einem dritten Schenkel. Die drei Schenkel sind dabei im Wesentlichen parallel oder in einem spitzen Winkel zueinander ausgerichtet.

Auch anders ausgedrückt, "Doppel-V-förmig" (vereinfacht und umgangssprachlich auch als "Zig-Zag-Form" bezeichenbar) meint eine der "N"-Form ähnliche Form, bei welcher aber (im Unterschied zur "N"-Form) die eckigen Übergänge von jeweils einem Schenkel zu einem unmittelbar nächsten Schenkel nicht unter dem gleichen spitzen Winkel erfolgt, sondern unterschiedliche Zwischenwinkel aufweisen.

D.h., eine Abfolge bei einer "Doppel-V-Form" ist ein erster Schenkel übergehend durch eine erste Ecke in einen zweiten Schenkel wieder übergehend durch eine zweite Ecke in einen dritten Schenkel. Die drei Schenkel sind dabei im Wesentlichen in jeweils einem spitzen Winkel zueinander ausgerichtet.

Anschaulich und vereinfacht, der Querschnitt des Grundträgers sieht zwei unmittelbar aufeinanderfolgende und ineinander übergehende Schlingen vor, deren jeweilige Öffnung entgegengesetzt zueinander ausgerichtet sind. Ein Richtungswechsel im Schlingengrund kann dabei gerundet ("Doppel-U-förmig") und/oder eckig ("Doppel-V-förmig", "N"-Form) erfolgen.

Dieser Grundträger bildet so, d.h., durch diesen über die Grundträgerlänge im Wesentlichen N-, Doppel-V- oder Doppel-U-förmigen Querschnitt - jeweils zwischen zwei gegenüberliegenden Schenkelflächen - einen ersten und einen zweiten Umgreifbereich aus, deren Umgreifbereichsöffnungen entgegengesetzt zueinander ausgerichtet sind.

Der Grundträger weist weiter auf seiner ersten Seite zumindest in einem Teil im Bereich des ersten Umgreifbereichs eine erste Oberflächenschicht aus einem ersten Material (erste Innenschicht) und auf seiner zweiten Seite zumindest in einem Teil im Bereich des zweiten Umgreifbereichs eine zweite Oberflächenschicht (zweite Innenschicht) aus einem zweiten Material auf.

Vereinfacht und anschaulich ausgedrückt, die entsprechende erste bzw. zweite Oberflächenschicht an der ersten bzw. zweiten Seite des Grundträgers kann bei dortigem ersten bzw. zweiten Umgreifbereich zumindest nur in einem Bereich dieses ersten bzw. zweiten Umgreifbereichs angeordnet sein. Beispielsweise kann ein solcher Bereich bei einem Umgreifbereich nur eine Seite, d.h. eine Schenkelfläche, dieses Umgreifbereichs sein.

Ein solches erstes und/oder zweites Material für die erste und/oder zweite Oberflächenschicht kann beispielsweise Zellulose, ein Vlies, Mull und/oder ein Schwamm sein.

Weiterhin ist vorgesehen, dass das erste Material mit einer ersten Flüssigkeit zumindest befeuchtet, insbesondere getränkt, ist und das zweite Material mit einer zweiten Flüssigkeit zumindest befeuchtet, insbesondere getränkt, ist.

Dabei ist die erste Flüssigkeit ein Reinigungsmittel für ein Material einer Wischlippe, beispielsweise ein Reinigungsmittel für Gummi, wie handelsübliche Gummireiniger, und die zweite Flüssigkeit ist Pflegemittel für ein Material einer Wischlippe, beispielsweise ein Pflegemittel für Gummi, wie Pflegekomponenten, beispielsweise Seifen, Wachse und Polymere, enthaltende Reinigungsmittel. Bei Kontakt der entsprechenden mit dem Reinigungsmittel bzw. Pflegemittel befeuchteten/getränkten Oberflächenschicht mit der Wischlippe kann so ein Reinigen und/oder Pflegen derselben bewerkstelligt werden.

Somit bildet sich hierdurch (bei der Vorrichtung bzw. dem Grundträger) - vereinfacht und anschaulich ausgedrückt - eine erste Reinigungsseite und eine zweite Pflegeseite bei dem Grundträger - für die Reinigung und Pflege von (Gummi-)Wischlippen von Scheibenwischerreinigungsblättern von Scheibenreinigungsanlagen (bei Fahrzeugen aller Art, insbesondere bei Kraftfahrzeugen) - aus.

Zweckmäßigerweise weist der Grundträger nur in dem einen Teil im Bereich des ersten Umgreifbereichs diese erste Oberflächenschicht - befeuchtet/getränkt mit der ersten Flüssigkeit bzw. mit dem Reinigungsmittel - und/oder nur in dem einen Teil im Bereich des zweiten Umgreifbereichs diese zweite Oberflächenschicht - befeuchtet/getränkt mit der zweiten Flüssigkeit bzw. mit dem Pflegemittel - auf.

Vereinfacht und anschaulich ausgedrückt, die entsprechende Oberflächenschicht beim Umgreifbereich an der ersten bzw. zweite Seite des Grundträgers kann dort nur bereichsweise, nämlich beispielsweise nur an einer Schenkelfläche des jeweiligen Umgreifbereichs, angeordnet sein.

Ist dann nämlich auch, wie vorgesehen, der Grundträger feuchtigkeitsundurchlässig, so kann dann keine Feuchtigkeit, d.h. nicht die erste und nicht die zweite Flüssigkeit bzw. nicht das Reinigungsmittel und nicht das Pflegemittel, von der jeweiligen Oberflächen-/Innenschicht (durch den Grundträger) nach außen dringen, wodurch bei (sachgerechter) Handhabung der Vorrichtung bzw. des Grundträgers jeglicher Hautkontakt mit der ersten/zweiten Flüssigkeit bzw. mit dem Reinigungs-/Pflegemittel vermieden werden kann. Die Vorrichtung ist so dann durchaus auch für Allergiker oder andere kritischen Anwender geeignet.

Darüber hinaus ist dadurch, d.h., ist der Grundträger feuchtigkeitsundurchlässig, auch ein Eindringen der ersten Flüssigkeit/des Reinigungsmittels in die Oberflächenschicht/Innenschicht der zweiten Flüssigkeit/des Pflegemittels ("Durchmischen") bzw. "vice versa" verhindert.

Diese so "(zumindest teilweise) im Inneren" beschichteten Umgreifbereiche können damit einen Gegenstand, wie eine Wischlippe eines Scheibenwischerreinigungsblattes einer Scheibenreinigungsanlage, - wird dieser in den jeweiligen Umgreifbereich eingeführt - umgreifen/umschließen bzw. dort aufnehmen.

Wird dann ein Kontakt zwischen der (gegebenenfalls befeuchteten/getränkten) Oberflächenschicht bzw. Innenschicht und dem in dem (jeweiligen) Umgreifbereich aufgenommenen Gegenstand, wie die Wischlippe, hergestellt, kann so eine Behandlung bzw. Bearbeitung des aufgenommenen Gegenstands, beispielsweise ein Reinigen und/oder Pflegen der Wischlippe, durch die (gegebenenfalls befeuchtete/getränkte) Oberflächenschicht bzw. Innenschicht bzw. unter Verwendung der (gegebenenfalls befeuchteten/getränkten) Oberflächenschicht bzw. Innenschicht durchgeführt werden bzw. erfolgen.

Um einen Kontakt der jeweiligen Oberflächenschicht bzw. Innenschicht mit einem in einem jeweiligen Umgreifbereich aufgenommenen Gegenstand, wie die Wischlippe, herzustellen, kann vorgesehen sein, dass die entsprechende Umgreifbereichsöffnung entsprechend dem zu umgreifenden Gegenstand ausgebildet ist. D.h., eine Breite der Öffnungsmündung des Umgreifbereichs kann beispielsweise in etwa (oder geringfügig größer als) einer Breite des aufzunehmenden Gegenstands dimensioniert sein.

Weist beispielsweise eine Wischlippe eine Breite von ungefähr 1 mm auf, so kann eine Breite der Öffnungsmündung des Umgreifbereichs auch in etwa 1 mm - oder geringfügig größer, d.h., beispielsweise ca. 1,1 mm bis 1,3 mm, dimensioniert sein (, solange es gewährleistet ist, dass der aufzunehmende Gegenstand tatsächlich auch von dem Umgreifbereich aufgenommen werden kann).

Ungeachtet dessen kann auch - zur Herstellung dieses Kontaktes zwischen der jeweiligen (gegebenenfalls befeuchteten/getränkten) Oberflächenschicht bzw. Innenschicht und des in dem jeweiligen Umgreifbereich aufgenommenen Gegenstands, wie die Wischlippe, - vorgesehen sein, dass der Grundträger elastisch verformbar ist, wobei durch die elastische Verformung, beispielsweise bewirkt durch einen händisch ausgeübten Druck, wie mit zwei Fingern, auf den Grundträger, die Umgreifbereiche und/oder die Umgreifbereichsöffnungen veränderbar sind.

D.h., einfach und anschaulich ausgedrückt, wird der Grundträger bzw. des Grundträgerprofil über/zwischen seine äußeren Profil-/Schenkelflächen (beispielsweise durch zwei Finger) zusammengedrückt, so kann dadurch ein Abstand zwischen den Schenkelflächen des Grundträgers verändert bzw. verringert werden (, d.h. die Umgreifbereiche und/oder die Umgreifbereichsöffnungen ändern bzw. verkleinern sich) und so der Kontakt zwischen der jeweiligen Oberflächenschicht bzw. Innenschicht und des in dem jeweiligen Umgreifbereich aufgenommenen Gegenstands hergestellt bzw. geschlossen werden.

Diese Verformbarkeit kann insbesondere auch durch eine entsprechende Dimensionierung einer Profilstärke/-dicke des Grundträgers, d.h. der Grundträgerdicke, insbesondere im Bereich eines Umgreifbereichsgrundes, realisiert sein.

Wird so beispielsweise (nur - oder auch darüber hinaus) in dem jeweiligen Umgreifbereichsgrund (dort) eine geringere Dicke als bei den diesen umgebenden Schenkelflächen des Grundträgers gewählt, so kann so auf einfache Weise die Verformbarkeit, d.h. das händisch mögliche Zusammendrücken des Grundträgers, realisiert werden.

Eine entsprechende Kontaktierung zwischen der jeweiligen (gegebenenfalls befeuchteten/getränkten) Oberflächenschicht bzw. Innenschicht und des in dem jeweiligen Umgreifbereich aufgenommenen Gegenstands kann sich ungeachtet dessen aber auch dadurch ergeben, dass sich der jeweilige Umgreifbereich in Richtung seines Umgreifbereichsgrunds verengt. D.h., das Profil des Grundträgers ist über seine Länge derart ausgebildet, dass die den jeweiligen Umgreifbereich einfassenden/ausbildenden Schenkelflächen des Grundträgers in Richtung des Umgreifbereichsgrunds zusammenlaufen.

Wird dann der in dem jeweiligen Umgreifbereich aufzunehmende Gegenstand, wie die Wischlippe "tief genug" in den Umgreifbereich eingeführt, so kommt es dann zu dieser Kontaktierung zwischen der jeweiligen Oberflächenschicht bzw. Innenschicht und des in dem jeweiligen Umgreifbereich aufgenommenen Gegenstands.

Bei der Behandlung bzw. Bearbeitung eines Gegenstands bzw. einer Wischlippe, wie einer Reinigung und/oder Pflege einer Wischlippe, kann dieser Gegenstand bzw. die Wischlippe in den jeweiligen Umgreifbereich aufgenommen, dort der Kontakt zwischen der jeweiligen (gegebenenfalls befeuchteten/getränkten) Oberflächenschicht bzw. Innenschicht und dem Gegenstand bzw. der Wischlippe, beispielsweise durch händisches Zusammendrücken des Grundträgers, hergestellt werden - und bei Aufrechterhaltung dieses Kontakt der Grundträger längs des Gegenstands bzw. der Wischlippe, insbesondere längs einer gesamten Länge des Gegenstands bzw. der Wischlippe, verschoben werden.

Dabei, d.h. durch diese Relativbewegung bei Anliegen von (gegebenenfalls befeuchteter/getränkter) Oberflächenschicht/Innenschicht am Gegenstand/Wischlippe, werden so - bei einer Reinigungsbehandlung - an dem Gegenstand bzw. an der Wischlippe anhaftende Verunreinigungen gelöst bzw. abgestreift.

Sind diese zwei - insbesondere für eine Reinigung und eine Pflege vorgesehenen - Umgreifbereiche mit ihren jeweiligen Umgreifbereichsöffnungen bei dem Grundträger entgegengesetzt zueinander ausgerichtet, so ist es möglich, durch einfache 180° Drehung des Grundträgers um dessen Längsachse zwischen Reinigung und Pflege zu wechseln.

Befindet sich jeweils die (erste bzw. zweite) Oberflächenschicht nur an jeweils einer der den jeweiligen Umgreifbereich begrenzenden Schenkelfläche, so kann ebenfalls durch einfache 180° Drehung des Grundträgers um dessen Hochachse eine zu reinigende/pflegende Seite eines in dem jeweiligen Umgreifbereich aufgenommenen Gegenstands, wie der Wischlippe, gewechselt werden.

Bevorzugte Weiterbildungen der Erfindung ergeben sich auch aus den abhängigen Ansprüchen.

So kann weiterbildend auch vorgesehen sein, dass die Umgreifbereiche begrenzende Schenkelflächen des Grundträgers im Wesentlichen gleiche Dimensionen aufweisen.

Nach einer weiteren Weiterbildung ist vorgesehen, dass die erste und/oder zweite Oberflächenschicht lösbar an dem Grundträger angeordnet sind/ist, beispielsweise in Form eines lösbaren streifenförmigen Elements bzw. Streifens, wie eines Reinigungs- und/oder Pflegestreifens. Eine Form eines solchen lösbaren Streifens kann beispielsweise im Wesentlichen einer Form einer Schenkelfläche eines Umgreifbereichs entsprechen.

Dabei kann die lösbare Verbindung unter Verwendung von selbsthaftenden Klettpunkten, welche insbesondere dann zwischen der Oberflächenschicht und dem Grundträger angeordnet sind, realisiert sein. Diese ermöglichen so einen einfachen und schnellen Austausch/Wechsel der Oberflächenschicht - und gewährleisten darüber hinaus auch noch einen präzisen Sitz der Oberflächenschicht (entlang der Klettpunkte ("Führungspunkte")) auf dem Grundträger.

Ferner kann auch vorgesehen sein, dass die lösbare erste und/oder zweite Oberflächenschicht durch einen oder mehrere streifenförmige Elemente gebildet werden/wird, dessen/deren Länge die Länge des Grundträgers zumindest bei einem Längsseitenende des Grundträgers um einen vorgebbaren Überstand überragt ("überstehender Reinigungs-/Pflegestreifen").

Beispielsweise kann - vereinfacht und anschaulich ausgedrückt - ein solcher "überstehender" Streifen eine Form im Wesentlichen einer Form einer in der Länge (um den Überstand) verlängerten Schenkelfläche eines Umgreifbereichs aufweisen.

Hier kann weiter dann auch vorgesehen sein, dass das streifenförmige Element bzw. der überstehende Reinigungs-/Pflegstreifen zumindest, insbesondere nur, im Bereich des Überstands flüssigkeitsfrei ist.

Damit kann das streifenförmige Element bzw. der überstehende Reinigungs-/Pflegestreife ohne Hautkontakt mit einem Reinigungs- und/oder Pflegemittel in der Oberflächenschicht gelöst bzw. gewechselt werden ("Allergiker geeignet").

Nach einer anderen Weiterbildung ist vorgesehen, dass die erste und/oder zweite Oberflächenschicht stoffschlüssig an dem Grundträger angeordnet sind/ist. Dazu kann beispielsweise die jeweilige Oberflächenschicht auf der jeweiligen Seite des Grundträgers aufgeklebt sein.

Die Vorrichtung stellt so - durch ihre sich aus ihren Merkmalen ergebenden Eigenschaften - eine einfache, wirkungsvolle und kostengünstige sowie eine "von Jedermann bedienbare" und "für Jedermann praktikable" Möglichkeit dar, welche - kann durch sie Wischlippen von Scheibenwischern auf einfache und für "Jedermann" praktikable Weise gereinigt und/oder gepflegt werden - die Effektivität und Effizienz von Scheibenwischern, insbesondere von Fahrzeugscheibenwischern, gewährleistet und erhöht - und so zur Sicherheit bei einer Fahrzeugführung beiträgt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung von einem oder mehreren Ausführungsbeispielen, das bzw. die im Zusammenhang mit den Figuren näher erläutert wird bzw. werden.

Die Erfindung ist jedoch nicht auf die in dem bzw. den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Gleiche Bauteile, Komponenten u.ä. sind durch gleiche Bezugszeichen in den Figuren kennzeichnet.

Es zeigen:
- FIG 1: eine Wischlippenreinigungsvorrichtung nach einer ersten Ausgestaltung,
- FIG 2: eine Wischlippenreinigungsvorrichtung nach einer weiteren Ausgestaltung.

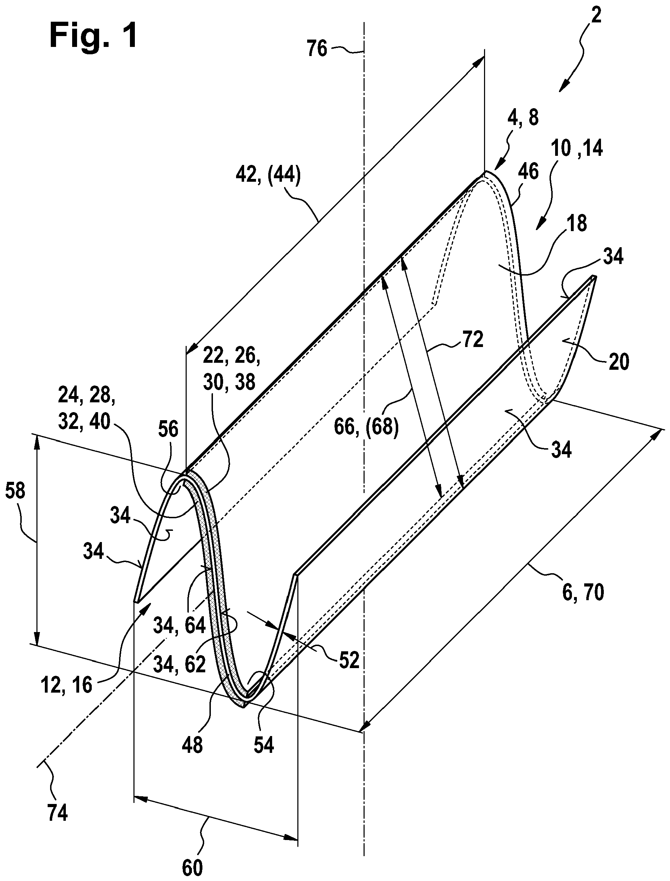

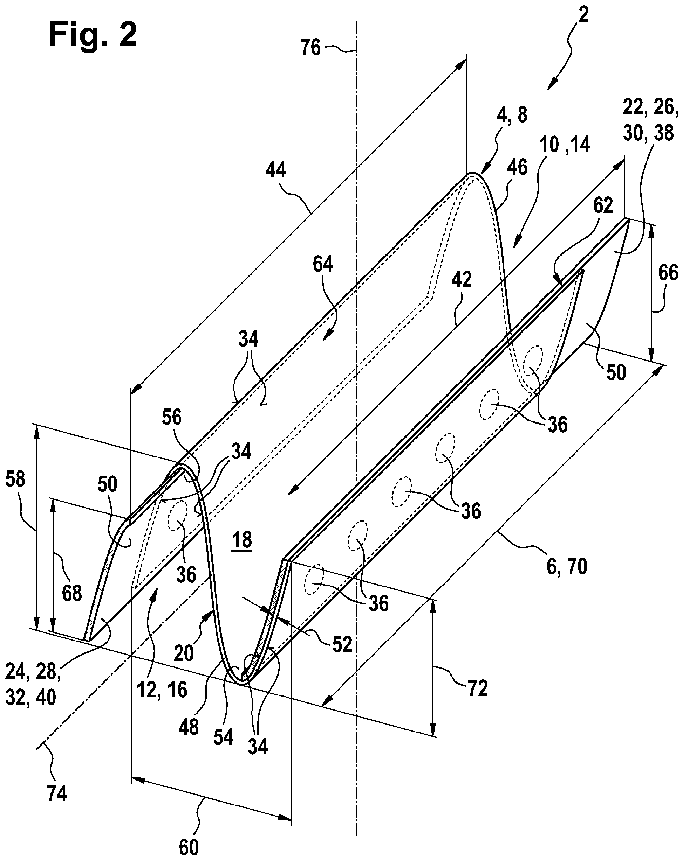

Ausführungsbeispiele: Wischlippenreinigungsschienen (FIG 1, FIG 2)

Die FIGen 1 und 2 zeigen jeweils eine Vorrichtung 2 zum Reinigen von (Gummi-)Wischlippen an Scheibenwischerreinigungsblättern von Scheibenreinigungsanlagen, kurz im Folgenden als Wischlippenreinigungsvorrichtung 2 und als Wischlippenreinigungsschiene 2 bzw. kurz nur als Reinigungsschiene 2, bezeichnet.

### - Reinigungsschiene 2 mit festen Reinigungs- 22, 38 und Pflegestreifen 24, 40 (FIG 1)

Die in FIG 1 gezeigte Reinigungsschiene 2 weist einen länglichen, dünnen Doppel-V-förmigen Grundträger 4 aus Kunststoff auf, dessen Dicke 52 in etwa 0,5 mm und dessen Länge 6 in etwa 9 cm sowie dessen Höhe 58 in etwa 2 cm beträgt und welcher zwei Seiten, d.h. eine erste Seite 18 und eine zweite Seite 20, besitzt.

Dieser Grundträger 4 bildet, wie FIG 1 verdeutlicht, - bedingt durch seinen Doppel-V-förmigen Querschnitt 8 bzw. sein Doppel-V-förmiges Profil 8 - jeweils zwischen zwei gegenüberliegenden (und in ihren Abmessungen im Wesentlichen gleichen) Schenkelflächen 34 - einen ersten Umgreifbereich 10 und einen zweiten Umgreifbereich 12 aus, deren Umgreifbereichsöffnungen 14 bzw. 16 entgegengesetzt zueinander (nach Darstellung in FIG 1 nach oben (für Umgreifbereich 10) und nach unten (für Umgreifbereich 12)) ausgerichtet sind.

Wie weiter FIG 1 verdeutlicht, weist der Grundträger 4 auf seiner ersten Seite 18 - dort an einer den ersten Umgreifbereich 10 ausbildenden Schenkelfläche 34, 62 - einen aus Mull 26 bestehenden Reinigungsstreifen 22, 38 auf, welcher 22, 38 bzw. dessen Mull 26 mit einer Reinigungsflüssigkeit 30 für Gummimaterial (Wischlippe) durchsetzt ist.

Auf seiner zweiten Seite 20 - dort ebenfalls an einer den zweiten Umgreifbereich 12 ausbildenden Schenkelfläche 34, 64 - weist der Grundträger 4 ebenfalls einen aus Mull 28 bestehenden Pflegestreifen 24, 40 auf, welcher 24, 40 bzw. dessen Mull 28 mit einer Pflegeflüssigkeit 30 für Gummimaterial (Wischlippe) durchsetzt ist.

Bei Kontakt des Reinigungsstreifens 22, 38 bzw. des Pflegestreifens 24, 40 mit einem Gummimaterial, d.h. mit einer (zu reinigenden/zu pflegenden) Wischlippe, kann so ein Reinigen und/oder Pflegen derselben bewerkstelligt werden.

Die beiden Streifen, d.h. der Reinigungsstreifen 22, 38 und der Pflegestreifen 24, 40, sind mit der jeweiligen Schenkelfläche 34, 62 bzw. 34, 64 des Grundträgers 4 fest verklebt.

Die Abmessungen des Reinigungsstreifens 22, 38 und des Pflegestreifens 24, 40 entsprechen, wie FIG 1 zeigt, jeweils in etwa der Abmessung der jeweiligen Schenkelfläche 34, 62 bzw. 34, 64, so dass der Reinigungsstreifen 22, 38 bzw. der Pflegestreifen 24, 40 die jeweilige Schenkelfläche 34, 62 bzw. 34, 64 im Wesentlichen vollständig überdeckt.

D.h., die Länge 42 des Reinigungsstreifens 22, 38 entspricht in etwa der Länge 70 der Schenkelfläche 34, 62 (und so auch der Länge 6 des Grundträgers 4); die Breite 66 des Reinigungsstreifens 22, 38 entspricht in etwa der Höhe der Schenkelfläche 34, 72 (und so ungefähr der Höhe 58 des Grundträgers 4). Entsprechend entspricht die Länge 44 des Pflegestreifens 24, 40 in etwa der Länge 70 der Schenkelfläche 34, 64 (und so auch der Länge 6 des Grundträgers 4); die Breite 68 des Pflegestreifens 24, 40 entspricht in etwa der Höhe der Schenkelfläche 34, 72 (und so ungefähr der Höhe 58 des Grundträgers 4).

Um - zur Reinigung bzw. Pflege der Wischlippe - den Kontakt zwischen dem Reinigungsstreifen 22, 38 bzw. dem Pflegestreifen 24, 40 und dem Gummimaterial bzw. der Wischlippe herzustellen, wird die Reinigungsschiene 2 bzw. der Grundträger 4 mit seinem entsprechenden Umgreifbereich 10 (Reinigung) bzw. Umgreifbereich 12 (Pflege) auf die Wischlippe aufgesetzt (, wobei die Wischlippe über die jeweilige Umgreifbereichsöffnung 14 bzw. Umgreifbereichsöffnung 16 in Richtung des jeweiligen Umgreifbereichsgrundes 54 bzw. Umgreifbereichsgrundes 56 in den jeweiligen Umgreifbereich 10 bzw. Umgreifbereich 12 eintaucht).

Die Reinigungsschiene 2 bzw. der Grundträger 4 - ist sie derart dünn (mit in etwa 0,5 mm Dicke 52) ausgebildet - wird dann - ausgehend von einer ungestauchten, anfänglichen maximalen Breite 60 von ca. 2,5 cm - durch Druck von zwei Fingern (Daumen und Zeigefinger) soweit zusammengedrückt (, wobei sich der die Wischlippe aufgenommene) Umgreifbereich 10 (Reinigung) bzw. Umgreifbereich 12 (Pflege) bzw. deren jeweilige Umgreifbereichsöffnung 14 bzw. 16 verengt), bis der Reinigungsstreifen 22, 38 bzw. der Pflegestreifen 24, 40 die Wischlippe kontaktiert.

Bei der Reinigung bzw. Pflege der Wischlippe wird weiter dann - bei Aufrechterhaltung des Kontakts zwischen Wischlippe und Reinigungsstreifen 22, 38 bzw. Pflegestreifen 24, 40 - die Reinigungsschiene 2 bzw. der Grundträger 4 längs der Wischlippe verschoben.

Dabei, d.h. durch diese Relativbewegung beim Anliegen vom Reinigungsstreifen 22, 38 bzw. Pflegestreifen 24, 40 an der Wischlippe, werden so - bei der Reinigungsbehandlung - an dem Gegenstand bzw. an der Wischlippe anhaftende Verunreinigungen gelöst bzw. abgestreift bzw. wird - bei der Pflegebehandlung - mittels des im Pflegestreifen 24, 40 befindlichen Pflegemittels 32 die Wischlippe gepflegt.

Sind bei der Reinigungsschiene 2 bzw. bei dem Grundträger 4 diese zwei Umgreifbereiche 10 (Reinigung) und 12 (Pflege) mit ihren jeweiligen Umgreifbereichsöffnungen 14 (Reinigung) und 16 (Pflege) entgegengesetzt zueinander ausgerichtet, so ist es möglich, durch einfache 180° Drehung des Grundträgers 4 um dessen Längsachse 74 zwischen Reinigung und Pflege zu wechseln.

Befindet sich auch jeweils der Reinigungsstreifen 22, 38 und der Pflegestreifen 24, 40 nur an jeweils einer der den jeweiligen Umgreifbereich 10 (Reinigung) bzw. 12 (Pflege) begrenzenden Schenkelfläche 34, 62 (Pflege) bzw. 34, 64, so kann ebenfalls durch einfache 180° Drehung des Grundträgers 4 um dessen Hochachse 76 die zu reinigende/pflegende Seite der in dem jeweiligen Umgreifbereich 10 (Reinigung) bzw. 12 (Pflege) aufgenommenen Wischlippe gewechselt werden.

### - Reinigungsschiene 2 mit wechselbaren Reinigungs- 22, 38 und Pflegestreifen 24, 40 (FIG 2)

Die in FIG 2 gezeigte Reinigungsschiene 2 weist, wie zuvor die Reinigungsschiene 2 nach FIG 1, ebenfalls einen länglichen, dünnen Doppel-V-förmigen Grundträger 4 - in diesem Fall aus wasserundurchlässiger Kartonage - auf, dessen Dicke 52 in etwa 0,1 mm und dessen Länge 6 in etwa 9 cm sowie dessen Höhe 58 in etwa 2 cm beträgt und welcher zwei Seiten, d.h. eine erste Seite 18 und eine zweite Seite 20, besitzt.

Dieser Grundträger 4 bildet, wie FIG 2 verdeutlicht, - auch wieder bedingt durch seinen Doppel-V-förmigen Querschnitt 8 bzw. sein Doppel-V-förmiges Profil 8 - jeweils zwischen zwei gegenüberliegenden (und in ihren Abmessungen im Wesentlichen gleichen) Schenkelflächen 34 - einen ersten Umgreifbereich 10 und einen zweiten Umgreifbereich 12 aus, deren Umgreifbereichsöffnungen 14 bzw. 16 entgegengesetzt zueinander (auch nach Darstellung in FIG 2 nach oben (für Umgreifbereich 10) und nach unten (für Umgreifbereich 12)) ausgerichtet sind.

Wie weiter FIG 2 verdeutlicht, weist der Grundträger 4 auf seiner ersten Seite 18 - dort an einer den ersten Umgreifbereich 10 ausbildenden Schenkelfläche 34, 62 - einen aus Mull 26 bestehenden Reinigungsstreifen 22, 38 auf, welcher 22, 38 bzw. dessen Mull 26 weitestgehend mit einer Reinigungsflüssigkeit 30 für Gummimaterial (Wischlippe) durchsetzt ist.

Auf seiner zweiten Seite 20 - dort ebenfalls an einer den zweiten Umgreifbereich 12 ausbildenden Schenkelfläche 34, 64 - weist der Grundträger 4 ebenfalls einen aus Mull 28 bestehenden Pflegestreifen 24, 40 auf, welcher 24, 40 bzw. dessen Mull 28 weitestgehend mit einer Pflegeflüssigkeit 32 für Gummimaterial (Wischlippe) durchsetzt ist.

Bei Kontakt des Reinigungsstreifens 22, 38 bzw. des Pflegestreifens 24, 40 mit einem Gummimaterial, d.h. mit einer (zu reinigenden/zu pflegenden) Wischlippe, kann so ein Reinigen und/oder Pflegen derselben bewerkstelligt werden.

Die beiden Streifen, d.h. der Reinigungsstreifen 22, 38 und der Pflegestreifen 24, 40, sind in diesem Fall mit der jeweiligen Schenkelfläche 34, 62 bzw. 34, 64 des Grundträgers 4 lösbar verbunden.

Zu dieser lösbaren Verbindung sind, wie FIG 2 verdeutlicht, selbsthaftende Klettpunkte 36 vorgesehen, welche zwischen dem Reinigungsstreifen 22, 38 bzw. dem Pflegestreifen 24, 40 und dem Grundträger 4 angeordnet sind.

Diese selbsthaftenden Klettpunkte 36 ermöglichen so einen einfachen und schnellen Austausch/Wechsel bzw. Erneuerung der jeweiligen Streifen, d.h. von Reinigungsstreifen 22, 38 bzw. von Pflegestreifen 24, 40, - und gewährleisten darüber hinaus auch noch einen präzisen Sitz der Streifen 22, 38 bzw. 24, 40 (entlang der Klettpunkte 36 ("Führungspunkte")) auf dem Grundträger 4.

Die Abmessungen des Reinigungsstreifens 22, 38 und des Pflegestreifens 24, 40 sind, wie FIG 2 zeigt, derart bemessen, dass sie jeweils - in Längsrichtung 74 - über die jeweilige Schenkelfläche 34, 62 bzw. 34, 64 überstehen. D.h., die Länge 42 des Reinigungsstreifens 22, 38 ist um einen Überstand 50, in diesem Fall von etwa 1,5 cm, länger als die Länge 70 der entsprechenden Schenkelfläche 34, 62 (und so auch der Länge 6 des Grundträgers 4); entsprechend ist auch die Länge 44 des Pflegestreifens 24, 40 um einen Überstand 50, auch hier wieder ca. 1,5 cm, länger als die Länge 70 der entsprechenden Schenkelfläche 34, 64 (und so auch der Länge 6 des Grundträgers 4).

Die Streifenbreiten 66 (Reinigungsstreifen) bzw. 68 (Pflegestreifen) entsprechen auch hier wieder, wie FIG 2 zeigt, in etwa der Höhe der jeweiligen Schenkelfläche 34, 72 (und so ungefähr der Höhe 58 des Grundträgers 4), wodurch die beiden Streifen, d.h. der Reinigungsstreifen 22, 38 und des Pflegestreifen 24, 40, die jeweilige Schenkelfläche 34, 62 bzw. 34, 64 im Wesentlichen (und darüber hinaus (Überstand)) vollständig abdecken.

Dabei ist der Reinigungsstreifen 22, 38 nur im Bereich außerhalb des Überstands 50 mit dem Reinigungsmittel 30 durchsetzt; entsprechend ist auch der Pflegesteifen 24, 40 auch nur im Bereich außerhalb des Überstands 50 mit dem Pflegemittel 32 durchsetzt. D.h., die Streifen 22, 38 bzw. 24, 40 sind im Bereich des jeweiligen Überstands 50 flüssigkeitsfrei (Reinigungsmittel 30, Pflegemittel 32).

Damit können der Reinigungsstreifen 22, 38 und der Pflegestreifen 24, 40 ohne Hautkontakt mit dem Reinigungsmittel 30 bzw. dem Pflegemittel 32 von dem Grundträger 4 gelöst bzw. gewechselt werden ("Allergiker geeignet").

Um - zur Reinigung bzw. Pflege der Wischlippe - auch hier den Kontakt zwischen dem Reinigungsstreifen 22, 38 bzw. dem Pflegestreifen 24, 40 und dem Gummimaterial bzw. der Wischlippe herzustellen, wird die Reinigungsschiene 2 bzw. der Grundträger 4 mit seinem entsprechenden Umgreifbereich 10 (Reinigung) bzw. Umgreifbereich 12 (Pflege) auf die Wischlippe aufgesetzt (, wobei die Wischlippe über die jeweilige Umgreifbereichsöffnung 14 bzw. Umgreifbereichsöffnung 16 in Richtung des jeweiligen Umgreifbereichsgrundes 54 bzw. Umgreifbereichsgrundes 56 in den jeweiligen Umgreifbereich 10 bzw. Umgreifbereich 12 eintaucht).

Die Reinigungsschiene 2 bzw. der Grundträger 4 - ist sie aus dünner, wasserundurchlässiger Kartonage ausgebildet - wird dann - ausgehend von einer ungestauchten, anfänglichen maximalen Breite 60 von ca. 2,5 cm - wieder durch Druck von zwei Fingern (Daumen und Zeigefinger) soweit zusammengedrückt (, wobei sich der die Wischlippe aufgenommene) Umgreifbereich 10 (Reinigung) bzw. Umgreifbereich 12 (Pflege) bzw. deren jeweilige Umgreifbereichsöffnung 14 bzw. 16 verengt), bis der Reinigungsstreifen 22, 38 bzw. der Pflegestreifen 24, 40 die Wischlippe kontaktiert.

Bei der Reinigung bzw. Pflege der Wischlippe wird weiter dann auch hier - bei Aufrechterhaltung des Kontakts zwischen Wischlippe und Reinigungsstreifen 22, 38 bzw. Pflegestreifen 24, 40 - die Reinigungsschiene 2 bzw. der Grundträger 4 längs der Wischlippe verschoben.

Dabei, d.h. durch diese Relativbewegung bei Anliegen von Reinigungsstreifen 22, 38 bzw. Pflegestreifen 24, 40 an der Wischlippe, werden so - bei der Reinigungsbehandlung - an dem Gegenstand bzw. an der Wischlippe anhaftende Verunreinigungen gelöst bzw. abgestreift bzw. wird - bei der Pflegebehandlung - mittels des im Pflegestreifen 24, 40 befindlichen Pflegemittels 32 die Wischlippe gepflegt.

Sind bei der Reinigungsschiene 2 bzw. bei dem Grundträger 4 diese zwei Umgreifbereiche 10 (Reinigung) und 12 (Pflege) mit ihren jeweiligen Umgreifbereichsöffnungen 14 (Reinigung) und 16 (Pflege) entgegengesetzt zueinander ausgerichtet, so ist es möglich, durch einfache 180° Drehung des Grundträgers 4 um dessen Längsachse 74 zwischen Reinigung und Pflege zu wechseln.

Befindet sich auch jeweils der Reinigungsstreifen 22, 38 und der Pflegestreifen 24, 40 nur an jeweils einer der den jeweiligen Umgreifbereich 10 (Reinigung) bzw. 12 (Pflege) begrenzenden Schenkelfläche 34, 62 (Pflege) bzw. 34, 64, so kann ebenfalls durch einfache 180° Drehung des Grundträgers 4 um dessen Hochachse 76 die zu reinigende/pflegende Seite der in dem jeweiligen Umgreifbereich 10 (Reinigung) bzw. 12 (Pflege) aufgenommenen Wischlippe gewechselt werden.

Obwohl die Erfindung im Detail durch das bzw. die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 2: (Wischlippenreinigungs-)Vorrichtung, Wischlippenreinigungsschiene
- 4: Grundträger
- 6: Grundträgerlänge
- 8: N-, Doppel-V-förmiger oder Doppel-U-förmige Querschnitt/Profil
- 10: erster Umgreifbereich
- 12: zweiter Umgreifbereich
- 14: erste Umgreifbereichsöffnung
- 16: zweite Umgreifbereichsöffnung
- 18: erste Seite
- 20: zweite Seite

- 22: erste Oberflächenschicht
- 24: zweite Oberflächenschicht
- 26: erstes Material
- 28: zweites Material
- 30: erste Flüssigkeit, Reinigungsmittel
- 32: zweite Flüssigkeit, Pflegemittel
- 34: Schenkelfläche
- 36: (selbsthaftender) Klettpunkt
- 38: streifenförmiges Element, Reinigungsstreifen
- 40: streifenförmiges Element, Pflegestreifen

- 42: Länge (von 38)
- 44: Länge (von 40)
- 46: Längsseitenende
- 48: Längsseitenende
- 50: Überstand
- 52: (Profil-/Grundträger-)Dicke
- 54: (erster) Umgreifbereichsgrund
- 56: (zweiter) Umgreifbereichsgrund
- 58: Höhe
- 60: Breite

- 62: Teil, Teilbereich, Schenkelfläche
- 64: Teil, Teilbereich, Schenkelfläche
- 66: Breite (von 38)
- 68: Breite (von 40)
- 70: Länge (von 34)
- 72: Höhe (von 34)
- 74: Längsachse, Längsrichtung
- 76: Hochachse, Hochrichtung

## Patentansprüche

1. Vorrichtung (2) zum Reinigen von Wischlippen an Scheibenwischerreinigungsblättern von Scheibenreinigungsanlagen, umfassend einen zweiseitigen (18, 20), feuchtigkeitsundurchlässigen Grundträger (4) mit einem über eine Grundträgerlänge (6) im Wesentlichen N-, Doppel-V-förmigen oder Doppel-U-förmigen Querschnitt (8), welcher einen ersten und einen zweiten Umgreifbereich (10, 12) bei dem Grundträger (4) ausbildet, deren Umgreifbereichsöffnungen (14, 16) entgegengesetzt zueinander ausgerichtet sind, wobei der Grundträger (4) auf seiner ersten Seite (18) zumindest in einem Teil (62) im Bereich des ersten Umgreifbereichs (10) eine erste Oberflächenschicht (22) aus einem ersten Material (26) und auf seiner zweiten Seite (20) zumindest in einem Teil (64) im Bereich des zweiten Umgreifbereichs (12) eine zweite Oberflächenschicht (24) aus einem zweiten Material (28) aufweist, **dadurch gekennzeichnet, dass** das erste Material (26) mit einer ersten Flüssigkeit (30) zumindest befeuchtet ist und das zweite Material (28) mit einer zweiten Flüssigkeit (32) zumindest befeuchtet ist und die erste Flüssigkeit (30) ein Reinigungsmittel für ein Material einer Wischlippe und die zweite Flüssigkeit (32) ein Pflegemittel für ein Material einer Wischlippe sind.

2. Vorrichtung (2) zum Reinigen von Wischlippen von Scheibenwischerreinigungsblättern nach mindestens einem der voranstehenden Ansprüche,
**dadurch gekennzeichnet,**
**dass** der Grundträger (4) auf seiner ersten Seite (18) nur in dem einem Teil (62) im Bereich des ersten Umgreifbereichs (10) die erste Oberflächenschicht (22) und/oder auf seiner zweiten Seite (20) nur in dem einen Teil (64) im Bereich des zweiten Umgreifbereichs (12) die zweite Oberflächenschicht (24) aufweist.

3. Vorrichtung (2) zum Reinigen von Wischlippen von Scheibenwischerreinigungsblättern nach mindestens einem der voranstehenden Ansprüche,
**dadurch gekennzeichnet,**
**dass** das erste Material (26) mit der ersten Flüssigkeit (30) getränkt ist und das zweite Material (28) mit der zweiten Flüssigkeit (32) getränkt ist.

4. Vorrichtung (2) zum Reinigen von Wischlippen von Scheibenwischerreinigungsblättern nach mindestens einem der voranstehenden Ansprüche,
**dadurch gekennzeichnet,**
**dass** der Grundträger (4) aus Kunststoff ist.

5. Vorrichtung (2) zum Reinigen von Wischlippen von Scheibenwischerreinigungsblättern nach mindestens einem der voranstehenden Ansprüche,
**dadurch gekennzeichnet,**
**dass** die erste und/oder zweite Oberflächenschicht (22, 24) aus einem Zellulosematerial, einem Vliesmaterial, einem Mullmaterial und/oder einem Schwammmaterial bestehen/-t.

6. Vorrichtung (2) zum Reinigen von Wischlippen von Scheibenwischerreinigungsblättern nach mindestens einem der voranstehenden Ansprüche,
**dadurch gekennzeichnet,**
**dass** die Umgreifbereiche (10, 12) begrenzende Schenkelflächen (34) des Grundträgers im Wesentlichen gleiche Dimensionen aufweisen.

7. Vorrichtung (2) zum Reinigen von Wischlippen von Scheibenwischerreinigungsblättern nach mindestens einem der voranstehenden Ansprüche,
**dadurch gekennzeichnet,**
**dass** die erste und/oder zweite Oberflächenschicht (22, 24) lösbar an dem Grundträger (4) angeordnet sind/ist.

8. Vorrichtung (2) zum Reinigen von Wischlippen von Scheibenwischerreinigungsblättern nach mindestens dem voranstehenden Anspruch,
**dadurch gekennzeichnet,**
**dass** die lösbare Verbindung unter Verwendung von selbsthaftenden Klettpunkten (36) realisiert ist.

9. Vorrichtung (2) zum Reinigen von Wischlippen von Scheibenwischerreinigungsblättern nach mindestens einem der beiden voranstehenden Ansprüche,
**dadurch gekennzeichnet,**
**dass** die lösbare erste und/oder zweite Oberflächenschicht (22, 24) durch ein oder mehrere streifenförmige Elemente (38, 40) gebildet werden/wird, dessen/deren Länge (42, 44) die Länge (6) des Grundträgers (4) zumindest bei einem Längsseitenende (46, 48) des Grundträgers (4) um einen vorgebbaren Überstand (50) überragt.

10. Vorrichtung (2) zum Reinigen von Wischlippen von Scheibenwischerreinigungsblättern nach mindestens dem voranstehenden Anspruch,
**dadurch gekennzeichnet,**
**dass** das streifenförmige Element (38, 40) zumindest im Bereich des Überstands (50) flüssigkeitsfrei ist.

11. Vorrichtung (2) zum Reinigen von Wischlippen von Scheibenwischerreinigungsblättern nach mindestens einem der voranstehenden Ansprüche,
**dadurch gekennzeichnet,**
**dass** die erste und/oder zweite Oberflächenschicht (22, 24) stoffschlüssig an dem Grundträger (4) angeordnet sind/ist.

12. Vorrichtung (2) zum Reinigen von Wischlippen von Scheibenwischerreinigungsblättern nach mindestens einem der voranstehenden Ansprüche,
**dadurch gekennzeichnet,**
**dass** der Grundträger (4) elastisch verformbar ist, wobei durch die elastische Verformung die Umgreifbereiche (10, 12) und/oder die Umgreifbereichsöffnungen (14, 16) veränderbar sind.

13. Vorrichtung (2) zum Reinigen von Wischlippen von Scheibenwischerreinigungsblättern nach mindestens dem voranstehenden Anspruch,
**dadurch gekennzeichnet,**
**dass** die Verformbarkeit durch eine Dimensionierung einer Profilstärke (52) des Grundträgers (4), insbesondere im Bereich eines Umgreifbereichsgrundes (54, 56), realisiert ist.

14. Vorrichtung (2) zum Reinigen von Wischlippen von Scheibenwischerreinigungsblättern nach mindestens einem der voranstehenden Ansprüche,
**dadurch gekennzeichnet,**
**dass** der Grundkörper (4) ein länglich dünner Körper ist.

## Claims

1. Device (2) for cleaning wiper lips on windscreen wiper cleaning blades of windscreen cleaning systems,
**characterized by** a two-sided (18, 20), moisture-impermeable base carrier (4) having a cross-section (8) which is substantially N-shaped, double V-shaped or double U-shaped over a base carrier length (6) and which forms a first and a second surrounding region (10, 12) in the base carrier (4) whose surrounding region openings (14, 16) are orientated counter to each other, wherein the base carrier (4) at the first side (18) thereof has at least in a portion (62) in the region of the first surrounding region (10) a first surface layer (22) of a first material (26) and at the second side (20) thereof at least in a portion (64) in the region of the second surrounding region (12) has a second surface layer (24) of a second material (28), wherein the first material (26) is at least moistened with a first fluid (30) and the second material (28) is at least moistened with a second fluid (32), and the first fluid (30) is a cleaning agent for a material of a wiper lip and the second fluid (32) is a care product for a material of a wiper lip.

2. Device (2) for cleaning wiper lips of windscreen wiper cleaning blades according to at least one of the preceding claims,
**characterized in that**
the base carrier (4) has at the first side (18) thereof only in the one portion (62) in the region of the first surrounding region (10) the first surface layer (22) and/or at the second side (20) thereof only in the one portion (64) in the region of the second surrounding region (12) has the second surface layer (24).

3. Device (2) for cleaning wiper lips of windscreen wiper cleaning blades according to at least one of the preceding claims,
**characterized in that**
the first material (26) is impregnated with the first fluid (30) and the second material (28) is impregnated with the second fluid (32).

4. Device (2) for cleaning wiper lips of windscreen wiper cleaning blades according to at least one of the preceding claims,
**characterized in that**
the base carrier (4) is of plastics material.

5. Device (2) for cleaning wiper lips of windscreen wiper cleaning blades according to at least one of the preceding claims,
**characterized in that**
the first and/or the second surface layer (22, 24) comprise(s) a cellulose material, a non-woven material, a gauze material and/or a sponge material.

6. Device (2) for cleaning wiper lips of windscreen wiper cleaning blades according to at least one of the preceding claims,
**characterized in that** member faces (34) of the base carrier which delimit the surrounding regions (10, 12) have substantially the same dimensions.

7. Device (2) for cleaning wiper lips of windscreen wiper cleaning blades according to at least one of the preceding claims,
**characterized in that**
the first and/or the second surface layer (22, 24) is/are releasably arranged on the base carrier (4) .

8. Device (2) for cleaning wiper lips of windscreen wiper cleaning blades according to at least the preceding claim,
**characterized in that**
the releasable connection is produced using self-adhesive hook and loop pads (36).

9. Device (2) for cleaning wiper lips of windscreen wiper cleaning blades according to at least one of the two preceding claims,
**characterized in that**
the releasable first and/or second surface layer (22, 24) is/are formed by means of one or more strip-like elements (38, 40) whose length (42, 44) overhangs the length (6) of the base carrier (4) at least at a longitudinal side end (46, 48) of the base carrier (4) by a predeterminable overhang (50) .

10. Device (2) for cleaning wiper lips of windscreen wiper cleaning blades according to at least the preceding claim,
**characterized in that**
the strip-like element (38, 40) is fluid-free at least in the region of the overhang (50).

11. Device (2) for cleaning wiper lips of windscreen wiper cleaning blades according to at least one of the preceding claims,
**characterized in that**
the first and/or the second surface layer (22, 24) is/are arranged in a materially integral manner on the base carrier (4).

12. Device (2) for cleaning wiper lips of windscreen wiper cleaning blades according to at least one of the preceding claims,
**characterized in that** the base carrier (4) is resiliently deformable,
wherein as a result of the resilient deformation the surrounding regions (10, 12) and/or the surrounding region openings (14, 16) can be changed.

13. Device (2) for cleaning wiper lips of windscreen wiper cleaning blades according to at least the preceding claim,
**characterized in that**
the deformability is produced by a sizing of a profile thickness (52) of the base carrier (4), in particular in the region of a surrounding region base (54, 56).

14. Device (2) for cleaning wiper lips of windscreen wiper cleaning blades according to at least one of the preceding claims,
**characterized in that**
the base member (4) is an elongate thin member.

## Revendications

1. Dispositif (2) de nettoyage de lèvres d'essuie-glace sur des raclettes de nettoyage d'essuie-glace d'installations de nettoyage de vitres,
**caractérisé par**
un support de base (4) à deux faces (18, 20), étanche vis-à-vis de l'humidité, comprenant une section transversale (8) essentiellement en forme de N, de double V ou de double U, sur une longueur du support de base (6), qui constitue une première et une deuxième région d'engagement périphérique (10, 12) au niveau du support de base (4), dont les ouvertures de régions d'engagement périphérique (14, 16) sont orientées à l'opposé l'une de l'autre, le support de base (4) présentant, sur sa première face (18), au moins dans une partie (62) dans la région de la première région d'engagement périphérique (10), une première couche de surface (22) constituée d'un premier matériau (26), et sur sa deuxième face (20), au moins dans une partie (64) dans la région de la deuxième région d'engagement périphérique (12), une deuxième couche de surface (24) constituée d'un deuxième matériau (28), le premier matériau (26) étant au moins humidifié avec un premier liquide (30) et le deuxième matériau (28) étant au moins humidifié avec un deuxième liquide (32) et le premier liquide (30) étant un agent de nettoyage pour un matériau d'une lèvre d'essuie-glace et le deuxième liquide (32) étant un agent de traitement pour un matériau d'une lèvre d'essuie-glace.

2. Dispositif (2) de nettoyage de lèvres d'essuie-glace de raclettes de nettoyage d'essuie-glace selon au moins l'une des revendications précédentes,
**caractérisé en ce que**
le support de base (4) présente la première couche de surface (22) sur sa première face (18), seulement dans ladite une partie (62) dans la région de la première région d'engagement périphérique (10), et/ou la deuxième couche de surface (24) sur sa deuxième face (20), seulement dans ladite une partie (64) dans la région de la deuxième région d'engagement périphérique (12).

3. Dispositif (2) de nettoyage de lèvres d'essuie-glace de raclettes de nettoyage d'essuie-glace selon au moins l'une des revendications précédentes,
**caractérisé en ce que**
le premier matériau (26) est imbibé avec le premier liquide (30) et le deuxième matériau (28) est imbibé avec le deuxième liquide (32).

4. Dispositif (2) de nettoyage de lèvres d'essuie-glace de raclettes de nettoyage d'essuie-glace selon au moins l'une des revendications précédentes,
**caractérisé en ce que**
le support de base (4) est en plastique.

5. Dispositif (2) de nettoyage de lèvres d'essuie-glace de raclettes de nettoyage d'essuie-glace selon au moins l'une des revendications précédentes,
**caractérisé en ce que**
la première et/ou la deuxième couche de surface (22, 24) se composent d'un matériau cellulosique, d'un matériau non tissé, d'un matériau de type gaze et/ou d'un matériau éponge.

6. Dispositif (2) de nettoyage de lèvres d'essuie-glace de raclettes de nettoyage d'essuie-glace selon au moins l'une des revendications précédentes,
**caractérisé en ce que**
des surfaces de branches (34) du support de base limitant les régions d'engagement périphérique (10, 12) présentent essentiellement des dimensions identiques.

7. Dispositif (2) de nettoyage de lèvres d'essuie-glace de raclettes de nettoyage d'essuie-glace selon au moins l'une des revendications précédentes,
**caractérisé en ce que**
la première et/ou la deuxième couche de surface (22, 24) est/sont disposées de manière amovible sur le support de base (4).

8. Dispositif (2) de nettoyage de lèvres d'essuie-glace de raclettes de nettoyage d'essuie-glace selon au moins la revendication précédente,
**caractérisé en ce que**
la liaison amovible est réalisée en utilisant des pastilles auto-adhésives (36).

9. Dispositif (2) de nettoyage de lèvres d'essuie-glace de raclettes de nettoyage d'essuie-glace selon au moins l'une des deux revendications précédentes,
**caractérisé en ce que**
la première et/ou la deuxième couche de surface amovible (22, 24) est/sont formées par un ou plusieurs éléments en forme de ruban (38, 40) dont la longueur (42, 44) dépasse, d'un dépassement prédéfinissable (50), la longueur (6) du support de base (4) au moins au niveau d'une extrémité du côté longitudinal (46, 48) du support de base (4).

10. Dispositif (2) de nettoyage de lèvres d'essuie-glace de raclettes de nettoyage d'essuie-glace selon au moins la revendication précédente,
**caractérisé en ce que**
l'élément en forme de ruban (38, 40) est exempt de liquide au moins dans la région du dépassement (50) .

11. Dispositif (2) de nettoyage de lèvres d'essuie-glace de raclettes de nettoyage d'essuie-glace selon au moins l'une des revendications précédentes,
**caractérisé en ce que**
la première et/ou la deuxième couche de surface (22, 24) est/sont disposées par engagement par liaison de matière sur le support de base (4).

12. Dispositif (2) de nettoyage de lèvres d'essuie-glace de raclettes de nettoyage d'essuie-glace selon au moins l'une des revendications précédentes,
**caractérisé en ce que**
le support de base (4) est déformable élastiquement, les régions d'engagement périphérique (10, 12) et/ou les ouvertures des régions d'engagement périphérique (14, 16) pouvant être modifiées par la déformation élastique.

13. Dispositif (2) de nettoyage de lèvres d'essuie-glace de raclettes de nettoyage d'essuie-glace selon au moins la revendication précédente,
**caractérisé en ce que**
la capacité de déformation est obtenue par un dimensionnement d'une épaisseur de profilé (52) du support de base (4), en particulier dans la région d'une base de la région d'engagement périphérique (54, 56).

14. Dispositif (2) de nettoyage de lèvres d'essuie-glace de raclettes de nettoyage d'essuie-glace selon au moins l'une des revendications précédentes,
**caractérisé en ce que**
le corps de base (4) est un corps mince longiligne.
